# EUROPEAN PATENT APPLICATION

(11) **EP 4 752 005 A1**
(43) Date of publication of application: **03.06.2026**
(21) Application number: 25202018.5
(22) Date of filing: 12.09.2025
(51) Int. Cl.: B60R 11/04, B60R 19/48, G01S 7/02, G01S 17/931

(54) **VEHICLE STRUCTURE**

(30) Priority: 28.11.2024 JP 2024207155
(71) Applicant: Suzuki Motor Corporation, Shizuoka 432-8611 (JP)
(72) Inventor: HOTTA, Shintaro, Hamamatsu-shi, 432-8611 (JP)
(74) Representative: Haseltine Lake Kempner LLP

(57) **Abstract**

[Problem to be Solved] To provide a vehicle structure capable of reducing deformation around a sensor support part and preventing decrease in sensing accuracy.

[Solution] A vehicle structure 1 includes a front grille 3 forming a design surface on a vehicle outer side, and a sensor support member 5 supporting a sensor S that senses the environment outside a vehicle and being provided on a vehicle inner side of the front grille 3. The sensor support member 5 includes a cavity 51 hollowed out one side in a vehicle inner-outer direction, and a sensor support part 52 being provided in the cavity 51 and supporting the sensor S. The sensor support part 52 includes a plurality of sensor fixing portions 52A1 to 52A3 to which the sensor S is fixed, and a coupling wall part 52B protruding on one side and/or on the other side in the vehicle inner-outer direction and coupling the plurality of sensor fixing portions 52A1 to 52A3 to each other.

## Description

### [Technical Field]

The present invention relates to vehicle structures including structures for placing, on an exterior member, a sensor for sensing the environment outside a vehicle.

### [Background Art]

In general, exterior members such as a bumper and a grille constituting a design surface on a vehicle outer side are provided on front and rear parts of a vehicle such as an automobile. A sensor that senses the environment outside the vehicle may be provided such as on the back surface of this exterior member. Examples of the sensor include a radar that uses a radio wave such as a millimeter wave or a microwave as a detection wave, light detection and ranging (LiDAR) that uses laser light as the detection wave, an acoustic wave sensor (ultrasonic sensor/sonar) that uses an acoustic wave such as an ultrasonic wave as the detection wave, and a camera (imaging device) that senses the environment outside the vehicle by imaging. A region that is opposite the sensor among the exterior members is formed as a detection wave passing part made of a material through which the detection wave can pass, and functions as a sensor cover. To improve the detection accuracy of the sensor, high accuracy is required for a relative location relation (relative distance and relative angle) between the detection wave passing part (sensor cover) of the exterior member and the sensor.

As an example of a conventional vehicle structure including a structure for placing the sensor on the exterior member, Patent Literature 1 below discloses a structure in which a radar antenna is fixed to a frame material that reinforces a panel material for a front grille. This structure facilitates adjustment of the relative location relation between the panel material that functions as the detection wave passing part (sensor cover) and the radar antenna.

### [Citation List]

### [Patent Literature]

[Patent Literature 1] JP 2021-059268 A

### [Summary of Invention]

### [Problems to be Solved by the Invention]

However, in such a conventional structure as in Patent Literature 1 described above, when a sensor support member (frame material) is molded of resin to reduce weight, an area around a sensor support part in the sensor support member may be deformed due to vibration or the like during vehicle travel, because there is a limit to increasing the rigidity of the sensor support member. When the area around the sensor support part is deformed, the location and angle of a detection wave transmitted and/or received by the sensor change, and therefore there is a problem in that the detection accuracy of the sensor decreases.

The present invention has been made in consideration of the above, and an object is to provide a vehicle structure capable of reducing deformation around a sensor support part to prevent decrease in detection accuracy.

### [Means for Solving the Problems]

To achieve the above object, one aspect of the present invention provides a vehicle structure including an exterior member forming a design surface on a vehicle outer side, and a sensor support member supporting a sensor that senses the environment outside the vehicle and being provided on a vehicle inner side of the exterior member. The sensor support member in this vehicle structure includes a cavity hollowed out one side in a vehicle inner-outer direction, and a sensor support part being provided in the cavity and supporting the sensor.

### [Advantageous Effects of Invention]

According to a vehicle structure of the present invention, it is possible to reduce deformation around a sensor support part and prevent decrease in detection accuracy.

### [Brief Description of Drawings]

[Figure 1] Figure 1 is a perspective view of a vehicle front part to which a vehicle structure according to one embodiment of the present invention is applied as seen from a front oblique direction.
[Figure 2] Figure 2 is an exploded perspective view of Figure 1.
[Figure 3] Figure 3 is a perspective view of a sensor support member to which a sensor is fixed as seen from the front oblique direction.
[Figure 4] Figure 4 is an enlarged perspective view of an area around a cavity in the sensor support member of Figure 3 as seen from front obliquely downward.
[Figure 5] Figure 5 is a cross-sectional side view along line A-A in Figure 1.
[Figure 6] Figure 6 is a cross-sectional perspective view of the sensor support member, to which the sensor of Figure 5 is fixed, and a front grille that are disassembled as seen from the front oblique direction.
[Figure 7] Figure 7 is a back view of the sensor support member coupled to the front grille as seen from rearward.
[Figure 8] Figure 8 is an enlarged perspective view of the area around the cavity in the sensor support member of Figure 7 as seen from a rear oblique direction.

### [Mode for Carrying Out the Invention]

Hereinafter, embodiments of the present invention will be described in detail with reference to the accompanying drawings.

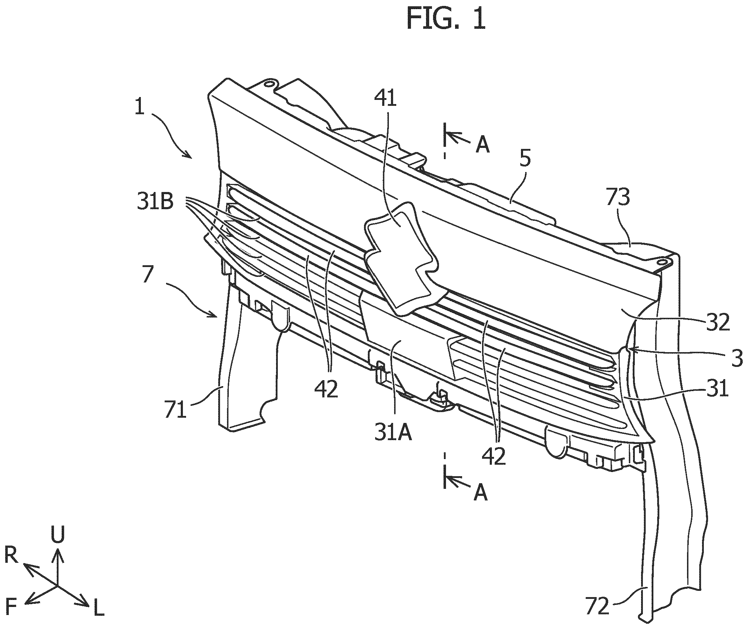

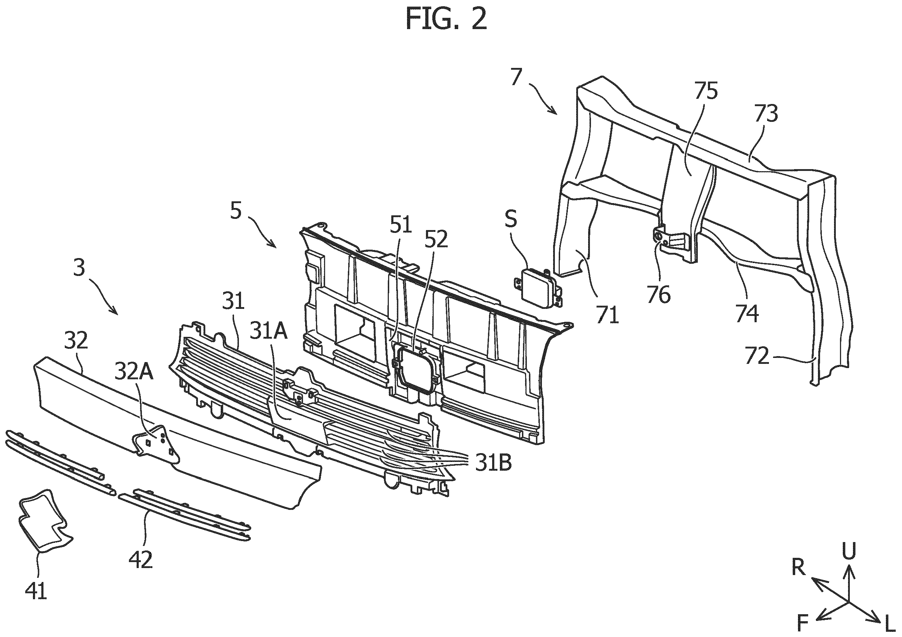

Figures 1 and 2 are a perspective view and an exploded perspective view of a vehicle front part to which a vehicle structure 1 according to one embodiment of the present invention is applied as seen from a front oblique direction. In each of the drawings described below, an arrow F direction indicates forward in a vehicle front-rear direction; an arrow U direction indicates upward in a vehicle up-down direction; and an arrow R direction and an arrow L direction indicate the right side and the left side, respectively, when viewed forward from inside the vehicle.

As shown in Figures 1 and 2, the vehicle structure 1 of the present embodiment is applied to the front part of the vehicle such as an automobile. The vehicle structure 1 includes a front grille 3 as an exterior member forming a design surface on the outer side of the front part of the vehicle, and a sensor support member 5 supporting a sensor S that senses the environment outside the vehicle and being provided on the vehicle inner side (rear side) of the front grille 3. The sensor S in the present embodiment is, for example, a radar (millimeter wave radar) that uses a millimeter wave as a detection wave. However, the sensor S is not limited to the millimeter wave radar and may be any radar that uses a radio wave, other than a millimeter wave, (such as a microwave) as the detection wave, LiDAR that uses laser light as the detection wave, an acoustic wave sensor (ultrasonic sensor/sonar) that uses an acoustic wave such as an ultrasonic wave as the detection wave, a camera (imaging device) that detects the environment outside the vehicle by imaging or the like.

The front grille 3 (exterior member) is provided on the front surface of the vehicle and extends in a vehicle width direction. The front grille 3 in the present embodiment includes a grille member 31 and a garnish member 32 that are vertically arranged in the vehicle up-down direction and extend in the vehicle width direction. In other words, the front grille 3 has a structure divided into two parts in the vehicle up-down direction.

The grille member 31 forms a lower part of the front grille 3 with the divided structure. The grille member 31 is on a propagation path of the detection wave (millimeter wave signal) transmitted and received by the sensor S supported by the sensor support member 5 and is configured so that the detection wave can pass through. The grille member 31 is formed in black or the like by integrally colored molding using a resin material such as polycarbonate (PC).

Specifically, a detection wave passing part 31A protruding forward in the vehicle is provided in a lower part in a center of the grille member 31 in the vehicle width direction. The detection wave passing part 31A has a front surface (protruding surface) that is a flat surface having a substantial rectangular shape long in the vehicle width direction in front view and forms a passing surface of the detection wave transmitted and received by the sensor S. That is, the front surface (passing surface) of the detection wave passing part 31A is placed opposite a transmission/reception surface of the sensor S supported by the sensor support member 5 via a predetermined interval in the vehicle front-rear direction.

In the grille member 31 including the detection wave passing part 31A described above, it is preferable that a colored coating not be applied to at least an area in and around the detection wave passing part 31A in consideration of detection wave passing loss. However, when a colorant having characteristics that allow the detection wave to transmit is used, it is possible to apply a colored coating to and around the detection wave passing part 31A. The present embodiment illustrates one example in which the passing surface of the detection wave passing part 31A is composed of a material having the characteristics that allow the detection wave to pass (transmit). However, the passing surface of the detection wave passing part 31A may have an opening formed to penetrate in the vehicle front-rear direction, and a body part of the sensor S including the transmission/reception surface may be configured to be exposed to a vehicle outer side through the opening. In this case, a sensor cover is provided on the vehicle outer side of the body part of the sensor S to prevent stones, water, or the like from hitting the body part.

The detection wave passing part 31A in the grille member 31 has an upper portion provided with a region in which a lower part of an emblem base 41 is placed. Furthermore, in a part of the grille member 31 that excludes the detection wave passing part 31A and the placement region of the emblem base 41, a plurality of grille holes 31B penetrating in the vehicle front-rear direction is formed. Each of the grille holes 31B extends in the vehicle width direction and is placed via a predetermined interval in the vehicle up-down direction. Furthermore, the grille member 31 has a front surface to which a plurality of grille garnishes 42 is attached, the grille garnishes extending in the vehicle width direction along respective grille holes 31B located above the detection wave passing part 31A among the plurality of grille holes 31B. Each grille garnish 42 is formed separately from the grille member 31. Each grille garnish 42 is attached to a location that is away upward from the detection wave passing part 31A of the vehicle, and it is therefore possible to apply a colored coating such as a glossy metallic coating. Additionally, among the plurality of grille holes 31B, portions that divide the respective grille holes 31B located on sides of the detection wave passing part 31A in the vehicle width direction are connected to opposite side surfaces of the detection wave passing part 31A in the vehicle width direction. Consequently, the support rigidity of the detection wave passing part 31A is increased, and a relative location relationship between the detection wave passing part 31A and the body part of the sensor S is readily maintained. In addition, in place of the portions that partition the grille holes 31B, protrusions protruding to the vehicle outer side from a panel surface of an exterior panel such as the grille member 31 may be provided, and the protrusions may be connected to the opposite side surfaces of the detection wave passing part 31A in the vehicle width direction, respectively, to increase the rigidity of the detection wave passing part 31A.

The garnish member 32 forms an upper part of the front grille 3 with the divided structure. The garnish member 32 is a resin member extending in the vehicle width direction with a substantially constant vertical width and is provided at a location away from the propagation path of the detection wave transmitted and received by the sensor S supported by the sensor support member 5. The garnish member 32 includes a lower edge portion coupled to an upper edge portion of the grille member 31. A recess 32A recessed to a vehicle rear side is provided in a central part of the garnish member 32 in the vehicle width direction (Figure 2), and an upper part of the emblem base 41 is mounted to an inner side of the recess 32A (Figure 1). In the garnish member 32, for example, the colored coating such as the glossy metallic coating is applied to a wide range of the surface on a face side (front side) that forms the design surface on the vehicle outer side. However, the material and colored coating range of the garnish member 32 are not limited to the above example, and it is possible to determine the material and colored coating range of the garnish member 32 depending on the design of the front grille 3 and the like.

The emblem base 41 is a component for attaching, to the front grille 3, an emblem (not shown) displaying a character, figure or the like symbolizing the manufacturer of the vehicle, the vehicle name, or the like. The emblem base 41 is molded of resin to match the outer shape of the emblem. On a rear surface part of the emblem base 41, a plurality of engaging claws and fasteners (not shown) are formed for attaching the emblem base 41 to each of the grille member 31 and garnish member 32 of the front grille 3. Although the rigidity of the front grille 3 is decreased by dividing the front grille 3 into the grille member 31 and the garnish member 32, the emblem base 41 is fixed to both the grille member 31 and the garnish member 32, to minimize decrease in rigidity of the front grille 3. The front grille 3 thus secured in rigidity is coupled to the sensor support member 5 from a vehicle front side.

The sensor support member 5 extends in the vehicle width direction and the vehicle up-down direction and is also formed by injection molding using a resin material or the like. The sensor support member 5 includes a cavity 51 and a sensor support part 52 in a lower portion of a central part in the vehicle width direction (Figure 2). The cavity 51 is hollowed out one side in a vehicle inner-outer direction, here on the vehicle inner side (rear side). The sensor support part 52 is provided in the cavity 51, has a frame shape and is configured to be able to support the sensor S. The sensor S is fixed from the vehicle rear side to the sensor support part 52. The sensor S is supported by the sensor support part 52 so that the transmission/reception surface of the detection wave is located within the frame of the sensor support part 52. The sensor support member 5 itself is fixed to and is supported by a highly rigid vehicle body frame 7 constituting a vehicle framework. A specific structure of the sensor support member 5 will be described later.

The vehicle body frame 7 includes components arranged in the front part of the vehicle including, for example, a pair of left and right vertical members 71 and 72 extending in the vertical up-down direction; an upper lateral member 73 and a lower lateral member 74 extending in the vehicle width direction between the right vertical member 71 and the left vertical member 72; a central vertical member 75 extending downward in the vehicle from a central part in the vehicle width direction of the upper lateral member 73 beyond the lower lateral member 74; and a coupling member 76 provided in a lower part of the central vertical member 75 (Figures 1 and 2).

The right vertical member 71 and the left vertical member 72 are joined to front end parts of a pair of left and right front side members (not shown), respectively, extending in the front-rear direction in the lower portion of the vehicle front part.

Opposite end portions of the upper lateral member 73 in the vehicle width direction are joined to upper end portions of the right vertical member 71 and the left vertical member 72, respectively. Opposite end portions of the lower lateral member 74 in the vehicle width direction are joined to intermediate parts in the up-down direction of the right vertical member 71 and the left vertical member 72, respectively.

The upper lateral member 73 is also referred to as a hood lock member, provided with a lock (not shown) for opening and closing a front hood, and is fixed with bolts to a distal vehicle body fixing part 58 provided in an upper end portion of the sensor support member 5, as described later. An upper end portion of the central vertical member 75 is fixed by welding or the like to the middle portion of the upper lateral member 73 in the vehicle width direction. The lower lateral member 74 is placed at a predetermined interval below the upper lateral member 73. The central vertical member 75 has a rear surface of the lower part fixed by welding or the like to a front surface of a central part of the lower lateral member 74 in the vehicle width direction. The coupling member 76 is joined to the front surface of the lower part of the central vertical member 75.

The coupling member 76 is formed in a hat shape opened to a vehicle rear in vertical view, and a flange portion of the coupling member on the vehicle rear side is fixed to the central vertical member 75 by welding or the like. To the front part of the coupling member 76, a proximal vehicle body fixing part 55 provided behind the cavity 51 of the sensor support member 5, as described later, is fixed with a bolt or the like.

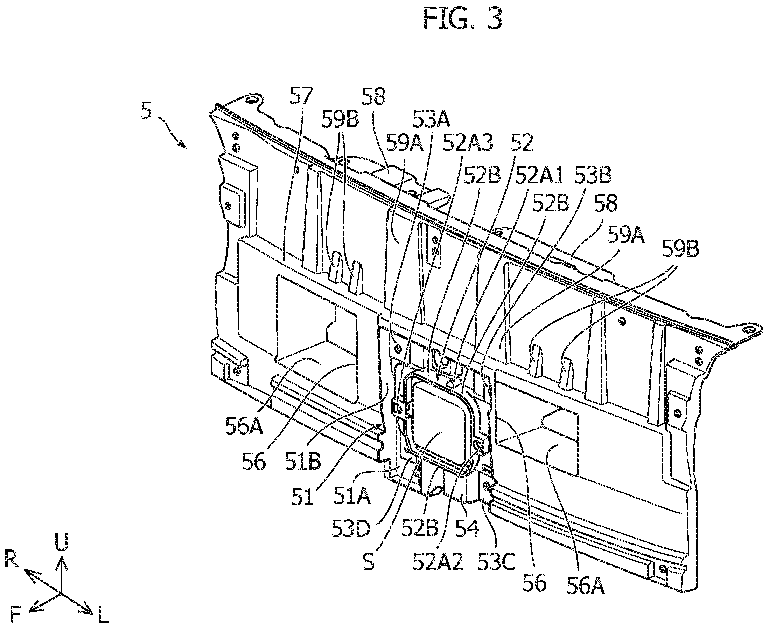

Here, the specific structure of the sensor support member 5 in the present embodiment will be described in detail with reference to Figures 3 to 8.

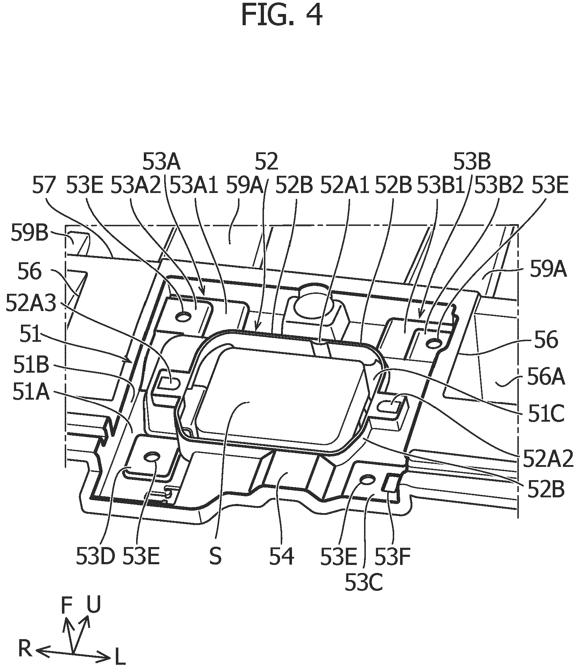

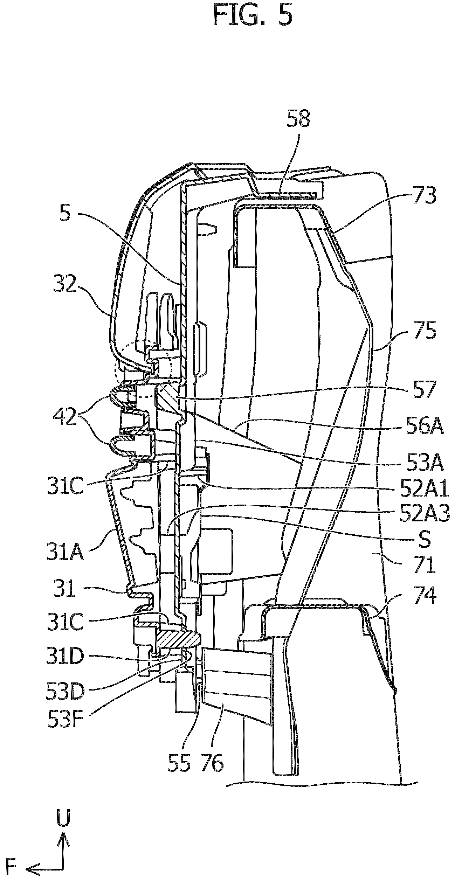

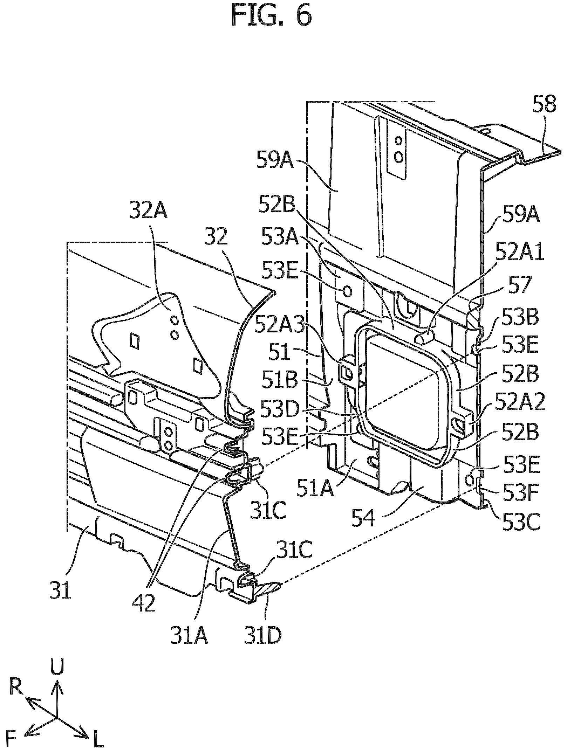

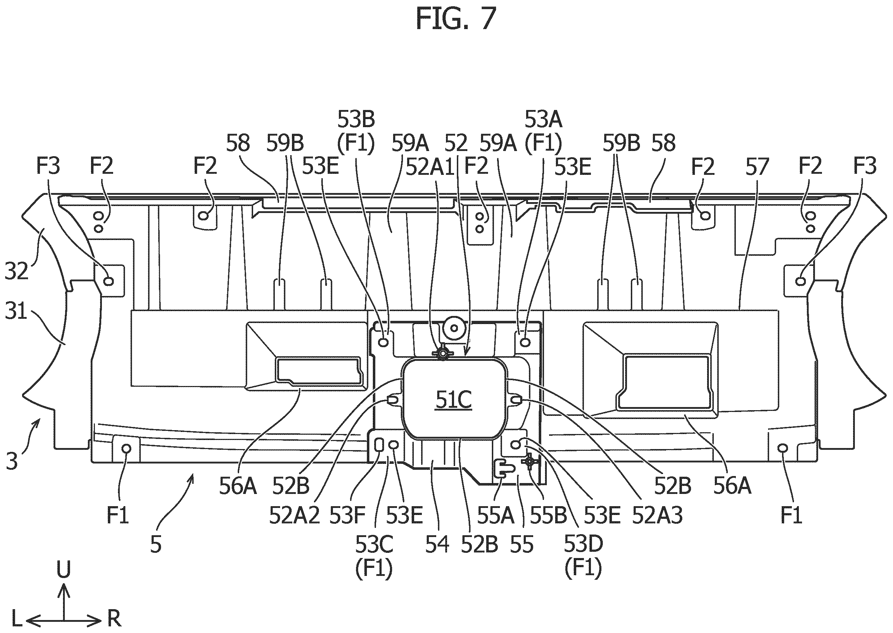

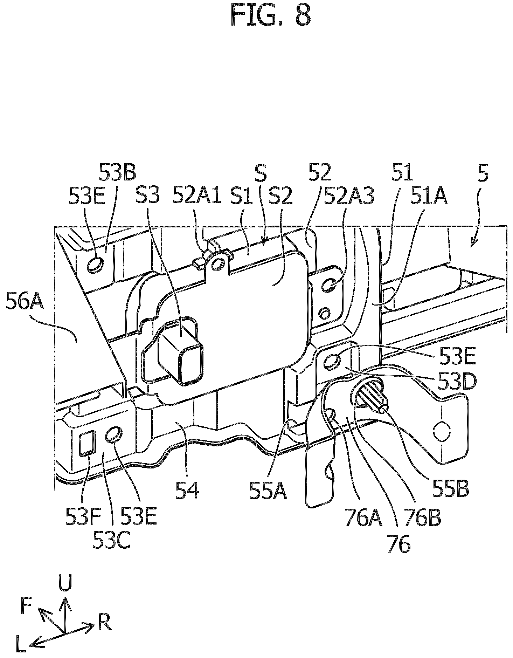

Figure 3 is a perspective view of the sensor support member 5 to which the sensor S is fixed as seen from the front oblique direction, and Figure 4 is an enlarged perspective view of an area around the cavity 51 in the sensor support member 5 of Figure 3 as seen from front obliquely downward. Figure 5 is a cross-sectional side view along line A-A in Figure 1, and Figure 6 is a cross-sectional perspective view of the sensor support member 5, to which the sensor S of Figure 5 is fixed, and the front grille 3 that are disassembled as seen from the front oblique direction. Furthermore, Figure 7 is a back view of the sensor support member 5 coupled to the front grille 3 as seen from rearward, and Figure 8 is an enlarged perspective view of the area around the cavity 51 in the sensor support member 5 of Figure 7 as seen from a rear oblique direction. In addition, Figure 8 shows a state in which the sensor S and the coupling member 76 of the vehicle body frame 7 are fixed to the sensor support member 5.

In the lower portion of the central part of the sensor support member 5 in the vehicle width direction, as shown with thick solid lines in Figures 3, 4, 6, and 7, the cavity 51 hollowed out the vehicle inner side (rear side) is provided. The cavity 51 includes an inner wall 51A and a peripheral wall 51B. The inner wall 51A extends in the vehicle width direction and the up-down direction and is formed in a substantially rectangular shape in front view. In a central part of the inner wall 51A, an opening 51C penetrating in the front-rear direction is provided (Figure 4). The opening 51C of the inner wall 51A is formed in a substantially rectangular shape corresponding to the outer shape of a main body of the sensor S. The peripheral wall 51B protrudes on the vehicle front side from an outer peripheral edge of the inner wall 51A and extends along the outer peripheral edge of the inner wall 51A. Specifically, the peripheral wall 51B in the present embodiment includes an upper wall portion and a lower wall portion that extend in the vehicle width direction and are opposite each other in the up-down direction, and a right wall portion and a left wall portion that extend in the up-down direction and are opposite each other in the vehicle width direction.

The cavity 51 contains the sensor support part 52 that supports the sensor S, a plurality of (here, four) coupling parts 53A, 53B, 53C, and 53D to which a peripheral portion of the detection wave passing part 31A in the grille member 31 is coupled, and a reinforcement 54 that couples and reinforces the peripheral wall 51B of the cavity 51 and the sensor support part 52 (Figures 3 to 6).

The sensor support part 52 has a frame shape protruding on the vehicle front side from the edge portion of the opening 51C in the inner wall 51A of the cavity 51. Specifically, the sensor support part 52 includes a plurality of (here, three) sensor fixing portions 52A1, 52A2, and 52A3 to which the sensor S is fixed, and a coupling wall part 52B that couples the sensor fixing portions 52A1 to 52A3 to each other.

The sensor fixing portion 52A1 is placed in an upper portion of a center of the sensor support part 52 in the vehicle width direction. The sensor fixing portion 52A2 is placed in a left portion of a center of the sensor support part 52 in the up-down direction. The sensor fixing portion 52A3 is placed in a right portion of the center of the sensor support part 52 in the up-down direction. A threaded hole is formed in each of the sensor fixing portions 52A1 to 52A3, and the sensor S is fixed from the vehicle rear to each of the sensor fixing portions 52A1 to 52A3 with bolts, screws, or the like.

The coupling wall part 52B includes a substantially L-shaped upper left portion coupling the sensor fixing portions 52A1 and 52A2, a substantially L-shaped upper right portion coupling the sensor fixing portions 52A1 and 52A3, and a substantially U-shaped lower portion coupling the sensor fixing portions 52A2 and 52A3. The coupling wall part 52B in the present embodiment protrudes to the vehicle outer side (front side) from the inner wall 51A of the cavity 51. Note that the coupling wall part 52B may protrude on the vehicle inner side (rear side) or on opposite sides (front and rear sides) in the vehicle inner-outer direction.

As described above, in the sensor support part 52 in the present embodiment, the coupling wall part 52B has a frame shape, and all the sensor fixing portions 52A1 to 52A3 are coupled to each other by the coupling wall part 52B, to increase support rigidity for the sensor S. However, the coupling wall part 52B may only couple at least two of the plurality of sensor fixing portions 52A1 to 52A3 to each other and, for example, the upper left portion that couples the sensor fixing portions 52A1 and 52A2 and the upper right portion that couples the sensor fixing portions 52A1 and 52A3 may be spaced.

Furthermore, in the sensor support part 52 in the present embodiment, a frame inner side in the coupling wall part 52B with a frame shape penetrates in the front-rear direction, and a body part S1 of the sensor S can be housed within the frame (Figure 8). This can prevent the body part S1 of the sensor S from projecting in the vehicle inner-outer direction from the sensor support part 52 (to the vehicle outer side in the present embodiment), so that the body part S1 of the sensor S can be readily protected from an external force applied from the vehicle outer side.

The coupling parts 53A to 53D are provided at four positions of an upper right portion, an upper left portion, a lower left portion, and a lower right portion of the cavity 51 (Figures 3 to 7). The upper right coupling part 53A protrudes in two stages to the vehicle outer side (front side) from the inner wall 51A of the cavity 51 (Figure 4). A protruding portion 53A1 of a first stage in the upper right coupling part 53A is formed continuously with an upper wall portion and a right wall portion in the peripheral wall 51B and with an upper right portion in the coupling wall part 52B of the sensor support part 52, and a protruding portion 53A2 of a second stage is formed continuously with the right wall portion of the peripheral wall 51B. The upper left coupling part 53B also protrudes in two stages to the vehicle outer side (front side) from the inner wall 51A of the cavity 51. A protruding portion 53B1 of a first stage in the upper left coupling part 53B is formed continuously with the upper wall portion and a left wall portion of the peripheral wall 51B and with an upper left portion in the coupling wall part 52B of the sensor support part 52, and a protruding portion 53B2 of a second stage is formed continuously with the left wall portion of the peripheral wall 51B. The lower left coupling part 53C protrudes slightly on the vehicle inner side (rear side) from the inner wall 51A of the cavity 51 and is formed continuously with the left wall portion and a lower wall portion in the peripheral wall 51B. The lower right coupling part 53D protrudes on the vehicle front side from the inner wall 51A of the cavity 51.

Each of the coupling parts 53A to 53D has a flat surface facing the vehicle front side, and each flat surface is provided with a circular through hole 53E that penetrates in the front-rear direction (Figures 4 to 6). A tapping screw or the like (not shown) is inserted into each through hole 53E. In the lower left coupling part 53C, a rectangular locating hole 53F is provided in addition to the through hole 53E. In the peripheral portion of the detection wave passing part 31A in the grille member 31, a screw receiving part 31C protruding to the vehicle rear side (and a locating protrusion 31D is provided to correspond to the through hole 53E (and the locating hole 53F) of each of the coupling parts 53A to 53D in the sensor support member 5 (Figures 5 and 6).

Coupling the grille member 31 to each of the coupling parts 53A to 53D includes inserting the locating protrusion 31D of the grille member 31 to the locating hole 53F of the lower left coupling part 53C in the sensor support member 5 for alignment, and tightening the tapping screw or the like, inserted into the through hole 53E of each of the coupling parts 53A to 53D in the sensor support member 5, to the screw receiving part 31C of the grille member 31. This couples the peripheral portion of the detection wave passing part 31A in the grille member 31 to each of the coupling parts 53A to 53D in the cavity 51 of the sensor support member 5. In the front grille 3 coupled to the sensor support member 5, the sensor S supported by the sensor support part 52 of the sensor support member 5 is placed opposite the front surface (passing surface) of the detection wave passing part 31A in the grille member 31 via the opening of the inner wall 51A in the cavity 51 of the sensor support member 5 and the sensor support part 52.

Since the coupling parts 53A to 53D described above are provided at four corners of the rectangular sensor support part 52, respectively, the rigidity of each of the coupling parts 53A to 53D is increased, and displacement of the detection wave passing part 31A as well as a relative location relationship between the detection wave passing part 31A and the body part S1 of the sensor S can be readily maintained.

The reinforcement 54 protrudes to the vehicle outer side (front side) from the inner wall 51A of the cavity 51 and couples the peripheral wall 51B of the cavity 51 to the sensor support part 52 (Figures 3 and 4). In the present embodiment, the reinforcement 54 extends downward in the vehicle from a lower portion in the sensor support part 52, in which the sensor fixing portions 52A1 to 52A3 are not arranged, and is connected to the lower wall part of the peripheral wall 51B of the cavity 51. In other words, the reinforcement 54 in the present embodiment extends in the up-down direction over the lower portion of the sensor support part 52 and the lower wall portion of the peripheral wall 51B of the cavity 51 and has a substantially U-shaped transverse cross section open to the vehicle rear side, and opposite end portions (right end portion and left end portion) located on the vehicle rear side are connected to the inner wall 51A of the cavity 51. The lower wall portion of the peripheral wall 51B to which the reinforcement 54 is connected has a height from the inner wall 51A (width in the front-rear direction of the peripheral wall 51B) that is relatively smaller than the upper wall portion, the right wall portion, and the left wall portion. In the present embodiment, since the reinforcement 54 is connected to the lower portion of the sensor support part 52 in which the sensor fixing portions 52A1 to 52A3 are not arranged, the rigidity of the sensor support part 52 is increased in a well-balanced manner.

On the back side (rear side) of the cavity 51 in the sensor support member 5, the proximal vehicle body fixing part 55 coupled to the coupling member 76 of the vehicle body frame 7 described above is provided (Figures 5, 7, and 8). The proximal vehicle body fixing part 55 is placed in a portion adjacent to the lower side of the lower right coupling part 53D in the cavity 51. The proximal vehicle body fixing part 55 includes a bolt hole 55A penetrating the portion in the front-rear direction, and a locating protrusion 55B protruding rearward from the portion (Figures 7 and 8). In the coupling member 76 of the vehicle body frame 7, a screw receiving part 76A and a locating hole 76B are provided to correspond to the bolt hole 55A and the locating protrusion 55B of the proximal vehicle body fixing part 55 (Figure 8).

Fixing the proximal vehicle body fixing part 55 to the coupling member 76 includes inserting the locating protrusion 55B of the proximal vehicle body fixing part 55 into the locating hole 76B of the coupling member 76 for alignment, and tightening a bolt or the like (not shown), inserted into the bolt hole 55A of the proximal vehicle body fixing part 55, to the screw receiving part 76A of the coupling member 76. Consequently, the proximal vehicle body fixing part 55 on the back of the cavity 51 in the sensor support member 5 is fixed to the coupling member 76 of the vehicle body frame 7.

Furthermore, ventilating openings 56 are provided on the outer side (the right side and the left side) in the vehicle width direction of the cavity 51 in the sensor support member 5 (Figures 3, 4, and 7). The right ventilating opening 56 is placed adjacent at a slight interval in the vehicle width direction to the right wall portion in the peripheral wall 51B of the cavity 51. The left ventilating opening 56 is placed adjacent to the left wall portion in the peripheral wall 51B of the cavity 51. Each ventilating opening 56 is open in the vehicle front-rear direction and has a substantially rectangular shape in front view. Each ventilating opening 56 includes a cylindrical peripheral wall portion 56A protruding on the vehicle inner side (rear side) in the vehicle from each opening edge. A length of the peripheral wall portion 56A protruding to the vehicle rear side is larger than the width in the front-rear direction of the peripheral wall 51B of the cavity 51 (Figures 5 and 8). An opening area of the ventilating openings 56, that is, the area of a region surrounded by the peripheral wall portion 56A gradually decreases toward the rear of the vehicle (Figure 7). In the present embodiment, the ventilating opening 56 corresponds to a "protruding shape part" of the present invention.

On an upper side of the cavity 51 in the sensor support member 5, a stepped part 57 extending in the vehicle width direction is provided (Figures 3 to 7). The stepped part 57 is placed adjacent to the upper wall portion extending in the vehicle width direction in the peripheral wall 51B of the cavity 51. The stepped part 57 protrudes on the vehicle inner side (rear side) and extends in the vehicle width direction beyond opposite ends (right and left ends) in a longitudinal direction of the upper wall portion of the peripheral wall 51B. In other words, the stepped part 57 extends along an upper edge of the cavity 51 in the vehicle width direction, and the stepped part is formed so that a lower surface of the sensor support member 5 extending downward from a front edge portion of the stepped part 57 (excluding a range adjacent to the cavity 51) is located on the vehicle outer side (front side) from an upper surface of the sensor support member 5 extending upward from a rear edge portion of the stepped part 57 (Figure 3). A right portion of the stepped part 57 is placed above and adjacent to the right ventilating opening 56, and a left portion of the stepped part 57 is placed above and adjacent to the left ventilating opening 56. Opposite end portions in the vehicle width direction of the stepped part 57 bend downward to extend downward and then bend outward in the vehicle width direction to extend to an end in the vehicle width direction of the sensor support member 5. **In** the present embodiment, the vehicle width direction corresponds to a "first direction" of the present invention, and the upper wall portion of the peripheral wall 51B of the cavity 51 corresponds to an "extended portion" of the present invention.

In the upper end part of the sensor support member 5, a distal vehicle body fixing part 58 fixed to the upper lateral member 73 of the vehicle body frame 7 is provided (Figures 3, and 5 to 7). In a direction (vehicle up-down direction) that is orthogonal to a longitudinal direction (vehicle width direction) of the stepped part 57, the distal vehicle body fixing part 58 is spaced on a side (upper side) further away from the cavity 51 than the stepped part 57. In the present embodiment, two distal vehicle body fixing parts 58 extending on the vehicle inner side (rear side) from an intermediate portion in the vehicle width direction in the upper end part of the sensor support member 5 are spaced in the vehicle width direction (Figure 3). Each distal vehicle body fixing part 58 is fixed with a bolt or the like (not shown) to the upper surface of the upper lateral member 73 of the vehicle body frame 7 (Figure 5). In the present embodiment, the vehicle up-down direction corresponds to a "second direction" of the present invention.

Between the stepped part 57 and the distal vehicle body fixing part 58 in the sensor support member 5, a plurality of bulging parts 59A and 59B are provided (Figures 3, 4, 6 and 7). The respective bulging parts 59A and 59B bulge on the vehicle outer side (front side) from the upper surface of the sensor support member 5 that extends upward from the rear edge portion of the stepped part 57 and extend in the vehicle up-down direction. A bulging length of each of the bulging parts 59A and 59B to the vehicle front side is smaller than a step (front-rear width) of the stepped part 57. In the present embodiment, relatively long bulging parts 59A extending in the up-down direction from the stepped part 57 to the distal vehicle body fixing part 58, and relatively short bulging parts 59B extending upward from the stepped part 57 are provided at intervals in the vehicle width direction (Figures 3 and 7).

Each relatively long bulging part 59A has a width in the vehicle width direction of a lower end portion that is larger than a width in the vehicle width direction of an upper end portion and has a substantially trapezoidal shape in front view. In the present embodiment, two bulging parts 59A on the right side of the stepped part 57 and three bulging parts 59A on the left side are arranged at intervals in the vehicle width direction. The upper end portions of two bulging parts 59A on the right side are connected to opposite side portions in the vehicle width direction of the right distal vehicle body fixing part 58. Furthermore, the upper end portion of the bulging part 59A located at the center in the vehicle width direction among three bulging parts 59A on the left side is connected to a portion slightly to the right of center in the vehicle width direction in the distal vehicle body fixing part 58 on the left side. Furthermore, among five bulging parts 59A, a width in the vehicle width direction of each of two bulging parts 59A arranged above the cavity 51 is larger than a width in the vehicle width direction of each of the remaining three bulging parts 59A. Thus, the wide bulging part 59A is placed between the cavity 51 and the distal vehicle body fixing part 58, so that rigidity around the cavity 51 and rigidity around the distal vehicle body fixing part 58 are increased.

The relatively short bulging part 59B has a bulging length to the vehicle front side that gradually decreases as the bulging part extends upward, and has a substantially rectangular shape in front view and a substantially right-angled triangular shape in side view. In the present embodiment, two bulging parts 59B on the right side of the stepped part 57 and two bulging parts 59B on the left side thereof are arranged at intervals in the vehicle width direction. The two bulging parts 59B on the right side are arranged below an outer portion (right portion) in the vehicle width direction of the right distal vehicle body fixing part 58. Furthermore, two bulging parts 59B on the left side are arranged below an outer portion (left portion) in the vehicle width direction of the left distal vehicle body fixing part 58.

Next, an example of an operation of attaching each member in the vehicle structure 1 of the present embodiment will be described.

In the vehicle structure 1 described above, first, the sensor S is fixed from the rear side of the vehicle using bolts, screws and the like to three sensor fixing portions 52A1 to 52A3 provided in the sensor support part 52 of the sensor support member 5. Specifically, as shown in Figure 8, when the sensor S includes the body part S1 and a bracket S2 joined to the back surface of the body part S1 (a surface opposite the transmission/reception surface of the detection wave), respective attaching positions provided on an upper part and opposite end parts in the vehicle width direction of the bracket S2 are aligned with and fixed with bolts, screws or the like to the respective sensor fixing portions 52A1 to 52A3 of the sensor support part 52. Consequently, the sensor body part S1 is supported within the frame of the sensor support part 52, and the detection wave transmission/reception surface is placed at a location that faces the vehicle front. In addition, a connector S3 is provided on the back surface of the body part S1, and the connector S3 extends to the vehicle rear side through an opening in the bracket S2.

The sensor support member 5 to which the sensor S is attached includes the distal vehicle body fixing part 58 fixed to the upper lateral member 73 of the vehicle body frame 7 and the proximal vehicle body fixing part 55 fixed to the coupling member 76 of the vehicle body frame 7. Consequently, the sensor support member 5 is fixed to the vehicle body frame 7 not only with the left and right distal vehicle body fixing parts 58 in the upper end part away upward from a support location of the sensor S, but also with the proximal vehicle body fixing part 55 in a lower portion of a central part in the vehicle width direction that is adjacent to the support location of the sensor S, so that stability of the support state of the sensor S is secured.

The front grille 3 is attached to the sensor support member 5 fixed to the vehicle body frame 7. Here, first, the grille member 31 and garnish member 32 of the front grille 3 are coupled. Specifically, for example, a plurality of engaging claws (not shown) formed on the lower edge portion of the garnish member 32 is engaged in a plurality of engagement holes (not shown) formed on the upper edge portion of the grille member 31, respectively, so that the grille member 31 is coupled to the garnish member 32. Such coupling using the engaging claws and engagement holes facilitates maintaining performances such as accuracy and appearance of a gap related to a parting part formed in a boundary portion between the grille member 31 and the garnish member 32.

The coupled grille member 31 and garnish member 32 are then fixed to predetermined locations on the sensor support member 5. In this case, a location at which the grille member 31 is fastened to the sensor support member 5 with a tapping screw and the like and a location at which the garnish member 32 is fastened to the sensor support member 5 with a tapping screw and the like are set to be different from each other.

Specifically, for example, as shown in Figure 7, fastening locations F1 to the grille member 31 in the sensor support member 5 are set to two positions in lower end portions of opposite end parts in the vehicle width direction, in addition to the four coupling parts 53A to 53D provided in the cavity 51. Furthermore, fastening locations F2 to the garnish member 32 in the sensor support member 5 are set to five positions arranged at a required interval in the vehicle width direction in the upper end portion.

For a coupling portion in which the upper edge portion of the grille member 31 overlaps the lower edge portion of the garnish member 32, bolt holes are formed at fastening locations F3 in an intermediate portion in the up-down direction in opposite ends in the vehicle width direction of the sensor support member 5, respectively, so that three superimposed pieces composed of the grille member 31, the garnish member 32 and the sensor support member 5 are fixed with bolts and the like. Furthermore, attaching the grille member 31 and the garnish member 32 to the sensor support member 5 includes fixing them with the tapping screws, bolts, and the like at the fastening locations F1 to F3. In addition, coupling positions of the engaging claws and engagement holes and the like may be set to appropriate locations, although not shown.

In a state in which the grille member 31 and the garnish member 32 are attached to the predetermined locations in the sensor support member 5, as shown in Figure 5, the coupling portion between the upper edge portion of the grille member 31 and the lower edge portion of the garnish member 32 is located in the garnish member 32 above the sensor support part 52 (see region surrounded by a broken line in Figure 5). Furthermore, the stepped part 57 of the sensor support member 5 abuts on the back (rear) of an upper part of the grille member 31, at a location below the coupling portion between the upper edge portion of the grille member 31 and the lower edge portion of the garnish member 32 (see a position indicated with a thick solid line in Figure 5). In such an attached state, displacement around the coupling portion between the grille member 31 and the garnish member 32 is reduced, so that the performances such as the accuracy and appearance of the gap related to the parting part formed in the coupling portion can be readily maintained.

When the front grille 3 (the grille member 31 and the garnish member 32) is attached to the sensor support member 5, the grille garnish 42 is attached at the predetermined location of the grille member 31, and furthermore, the emblem base 41 is attached at the predetermined location straddling the grille member 31 and the garnish member 32 (Figures 1 and 2).

After completion of the attaching operation of each part as described above, for example, if replacement of the garnish member 32 is required, the emblem base 41 is first removed from the front grille 3. Then, when removing the garnish member 32 from the sensor support member 5, the garnish member 32 may only be removed without removing the grille member 31 from the sensor support member 5, because the fastening locations F1 and F2 of the grille member 31 and garnish member 32 with the tapping screws and the like are set to be different from each other. Specifically, only the garnish member 32 can be removed from the sensor support member 5 by extracting the bolts and the like from the fastening locations F3 at the opposite ends in the vehicle width direction of the sensor support member 5 and then extracting the tapping screws and the like from the fastening locations F2 corresponding to the garnish member 32.

Assume that the grille member 31 must be removed from the sensor support member 5 during the replacement of the garnish member 32, when the grille member 31 is reattached, decrease (torque down) in fastening force of the tapping screw or the like at the fastening location F1 may occur. However, according to the above-described structure in the present embodiment, since it is not necessary to remove the grille member 31 from the sensor support member 5, the decrease in fastening force with the tapping screw or the like in the fastening location F1 can be avoided. This reduces deformation of the coupling portion between the grille member 31 and the garnish member 32 or deformation of the grille member 31, and deviation in relative location relation between the detection wave passing part 31A of the grille member 31 and the sensor S due to the decrease in fastening force. Consequently, the detection accuracy of the sensor S can be prevented from being decreased due to the replacement of the garnish member 32.

Next, operations and effects of the vehicle structure 1 of the present embodiment will be described in detail.

In the vehicle structure 1 described above, the sensor support member 5 being provided on the vehicle inner side of the front grille 3 (exterior member) and supporting the sensor S includes the cavity 51 hollowed out the vehicle inner side (rear side), and the sensor support part 52 being provided in the cavity 51 and supporting the sensor S. According to the vehicle structure 1, since the periphery of the sensor support part 52 is reinforced by the wall surface forming the cavity 51, the rigidity (especially torsional rigidity) of the sensor support part 52 can be increased. Consequently, displacement of the sensor S by deformation around the sensor support part 52 due to vibration during vehicle traveling or the like can be reduced, and the detection accuracy of the sensor S can be prevented from being decreased.

Furthermore, in the vehicle structure 1 of the present embodiment, the sensor support part 52 includes the plurality of sensor fixing portions 52A1 to 52A3, and the coupling wall part 52B protruding on one side and/or the other side in the vehicle inner-outer direction and coupling the plurality of sensor fixing portions 52A1 to 52A3 to each other. Since the sensor fixing portions 52A1 to 52A3 in the sensor support part 52 are thus coupled to each other by the coupling wall part 52B, the support rigidity of the sensor S can be further increased.

Additionally, in the vehicle structure 1 of the present embodiment, in the cavity 51 of the sensor support member 5, the coupling parts 53A to 53D are provided to which the peripheral portion of the detection wave passing part 31A in the grille member 31 of the front grille 3 is coupled. Since the coupling parts 53A to 53D are provided in the cavity 51, the rigidity of the cavity 51 can be increased, and hence the deformation around the sensor support part 52 can be further reduced. Furthermore, since the peripheral portion of the detection wave passing part 31A in the grille member 31 is coupled to the cavity 51 of the sensor support member 5, the support rigidity of the detection wave passing part 31A can be increased, and the displacement around the detection wave passing part 31A can be reduced. In addition, when at least one of the sensor support part 52 and the detection wave passing part 31A is deformed, the other is also deformed to match or follow the deformation, and hence the relative location relationship between the sensor S and the detection wave passing part 31A is readily maintained.

**In** addition, in the vehicle structure 1 of the present embodiment, the upper right, upper left and lower left coupling parts 53A to 53C among the coupling parts 53A to 53D provided in the cavity 51 protrude on the vehicle outer side (front side) or on the vehicle inner side (rear side) from the inner wall 51A of the cavity 51 and are formed continuously with a part of the peripheral wall 51B of the cavity 51. The coupling parts 53A to 53C are formed to further increase the rigidity of the cavity 51 and the support rigidity of the detection wave passing part 31A, so that the displacement around the sensor support part 52 and around the detection wave passing part 31A can be further reduced.

Furthermore, in the vehicle structure 1 of the present embodiment, the sensor support member 5 includes the ventilating opening 56 (protruding shape part) being placed adjacent to the cavity 51 and protruding on the vehicle inner side (rear side). Since the ventilating opening 56 is provided in the sensor support member 5, the rigidity around the cavity 51 is increased, which in turn further increases the rigidity of the sensor support part 52. Therefore, the deformation around the sensor support part 52 can be effectively reduced.

Additionally, in the vehicle structure 1 of the present embodiment, the sensor support member 5 includes the stepped part 57 placed adjacent to the upper wall portion (extended portion) extending in the vehicle width direction (first direction) in the peripheral wall 51B of the cavity 51. The stepped part 57 protrudes on the vehicle inner side (rear side) and extends in the vehicle width direction beyond the end in the longitudinal direction of the upper wall portion. Since the stepped part 57 is provided in the sensor support member 5, the rigidity around the cavity 51 in the vehicle width direction is further increased, and hence the deformation around the sensor support part 52 can be more effectively reduced.

**In** addition, in the vehicle structure 1 of the present embodiment, the sensor support member 5 includes the distal vehicle body fixing part 58 and the bulging parts 59A and 59B. The distal vehicle body fixing part 58 is spaced on the side further away from the cavity 51 than the stepped part 57 in the vehicle up-down direction (second direction) and is fixed to the upper lateral member 73 of the vehicle body frame 7. The bulging parts 59A and 59B are arranged between the stepped part 57 and the distal vehicle body fixing part 58, bulge on the vehicle outer side (front side), and extend in the up-down direction. Since the distal vehicle body fixing part 58 and the bulging parts 59A and 59B are provided in the sensor support member 5, the rigidity around the cavity 51 in the vehicle up-down direction is further increased, and the deformation around the sensor support part 52 can thus be more effectively reduced.

Furthermore, in the vehicle structure 1 of the present embodiment, the sensor support part 52 of the sensor support member 5 is formed to protrude on the vehicle outer side (front side) from the inner wall 51A of the cavity 51. The sensor support member 5 includes the reinforcement 54 protruding on the vehicle outer side (front side) from the inner wall 51A of the cavity 51 and coupling and reinforcing the peripheral wall 51B of the cavity 51 and the sensor support part 52. Since the reinforcement 54 is thus provided, the rigidity of both the cavity 51 and the sensor support part 52 is increased, and hence the deformation around the sensor support part 52 can be more effectively reduced.

Additionally, in the vehicle structure 1 of the present embodiment, the sensor support member 5 includes the proximal vehicle body fixing part 55 provided in the cavity 51 and fixed to the vehicle body. Since the proximal vehicle body fixing part 55 is thus provided, the rigidity of the cavity 51 is significantly increased, and hence the deformation around the sensor support part 52 can be more effectively reduced.

As above, the embodiments of the present invention have been described, and the present invention is not limited to the above-described embodiments, and various modifications and changes are possible based on the technical concept of the present invention.

For example, the above-described embodiment illustrates one example in which the cavity 51 of the sensor support member 5 is hollowed out the vehicle inner side (rear side) and may be hollowed out the vehicle outer side (front side) in the vehicle. That is, the sensor support member 5 may include the cavity 51 hollowed out one side in the vehicle inner-outer direction.

Moreover, the above-described embodiment illustrates one example in which the sensor support part 52 of the sensor support member 5 has the frame shape, and the shape of the sensor support part 52 is not limited to the above example. For example, a plurality of sensor fixing portions 52A1 to 52A3 may be provided on the inner wall 51A of the cavity 51, and the coupling wall part 52B may be omitted from the sensor support part 52. In a specific example, the sensor support part 52 may include a portion protruding on the vehicle outer side from the inner wall 51A of the cavity 51, and a sensor fixing part may be provided in or around the portion. Alternatively, the sensor support part may include a portion hollowed out the vehicle inner side from the inner wall 51A of the cavity 51, and a sensor fixing part may be provided in or around the portion.

Furthermore, the above-described embodiment illustrates one example in which in the sensor support part 52 with the frame shape, the plurality of sensor fixing portions 52A1 to 52A3 are coupled to each other by the coupling wall part 52B. However, when the plurality of sensor fixing portions 52A1 to 52A3 are arranged adjacent to the frame shape portion of the sensor support part 52, the respective sensor fixing portions 52A1 to 52A3 may not necessarily be coupled. In such a case, the frame shape portion of the sensor support part 52 functions as a portion for increasing the rigidity around each of the sensor fixing portions 52A1 to 52A3.

Additionally, the above-described embodiment illustrates the front grille 3 with a two-part structure as an example of the exterior member, and a front grille with a single structure or a three or more-part structure may be an exterior member. Furthermore, the exterior member is not limited to the front grille and may be a front bumper placed in the vehicle front part, or a rear bumper or rear grille placed in the vehicle rear part.

In addition, the above-described embodiment illustrates one example in which the cavity 51 is formed in the substantially rectangular shape in front view, and the shape of the cavity 51 is not limited to the above example. For example, the cavity may have a polygonal shape with three or more vertices, a U-shape, a circular shape, an elliptical shape, or the like.

Moreover, the above-described embodiment illustrates the ventilating opening 56 as one example of the protruding shape part placed adjacent to the cavity 51, and the protruding shape part is not limited thereto. For example, if a vehicle body fixing part protruding in the vehicle inner-outer direction and being fixed to the vehicle body frame is provided adjacent to the cavity 51, the vehicle body fixing part may be a protruding shape part.

Furthermore, the above-described embodiment illustrates one example in which the stepped part 57 is placed adjacent to the upper wall portion extending in the vehicle width direction in the peripheral wall 51B of the cavity 51, and the stepped part 57 may be placed adjacent to the right wall portion or the left wall portion extending in the vehicle up-down direction in the peripheral wall 51B. In this case, the vehicle up-down direction corresponds to the "first direction" of the present invention, and the right wall portion or the left wall portion corresponds to the "extended portion" of the present invention. In this case, the distal vehicle body fixing part 58 is provided, for example, in the right end part or the left end part of the sensor support member 5, and the bulging parts 59A and 59B extend in the vehicle width direction (second direction).

### [Reference Signs List]

- 1: Vehicle structure
- 3: Front grille (exterior member)
- 31: Grille member
- 31A: Detection wave passing part
- 31B: Grille hole
- 31C: Screw receiving part
- 31D: Locating protrusion
- 32: Garnish member
- 32A: Recess
- 41: Emblem base
- 42: Grille garnish
- 5: Sensor support member
- 51: Cavity
- 51A: Inner wall
- 51B: Peripheral wall
- 51C: Opening
- 52: Sensor support part
- 52A1 to 52A3: Sensor fixing portion
- 53A to 53D: Coupling part
- 53E: Through hole
- 53F: Locating hole
- 54: Reinforcement
- 55: Proximal vehicle body fixing part
- 55A: Bolt hole
- 55B: Locating protrusion
- 56: Ventilating opening (protruding shape part)
- 56A: Peripheral wall portion
- 57: Stepped part
- 58: Distal vehicle body fixing part
- 59A, 59B: Bulging part
- 7: Vehicle body frame
- 71: Right vertical member
- 72: Left vertical member
- 73: Upper lateral member
- 74: Lower lateral member
- 75: Central vertical member
- 76: Coupling member
- 76A: Screw receiving part
- 76B: Locating hole
- F1 to F3: Fastening location
- S: Sensor
- S1: Body part
- S2: Bracket
- S3: Connector

## Claims

1. A vehicle structure comprising:
an exterior member forming a design surface on a vehicle outer side, and
a sensor support member supporting a sensor that senses an environment outside a vehicle and being provided on a vehicle inner side of the exterior member, **characterized in that** the sensor support member includes:
a cavity hollowed out one side in a vehicle inner-outer direction, and
a sensor support part being provided in the cavity and supporting the sensor.

2. The vehicle structure according to claim 1, wherein the sensor support part includes:
a plurality of sensor fixing portions to which the sensor is fixed, and
a coupling wall part protruding on one side and/or on the other side in the vehicle inner-outer direction and coupling the plurality of sensor fixing portions to each other.

3. The vehicle structure according to claim 1 or 2, wherein the exterior member includes a detection wave passing part which is placed opposite a vehicle outer side of the sensor supported by the sensor support part and through which a detection wave transmitted and/or received by the sensor passes, and
the sensor support part includes a coupling part which is provided in the cavity and to which a peripheral portion of the detection wave passing part in the exterior member is coupled.

4. The vehicle structure according to claim 3, wherein the cavity includes an inner wall, and a peripheral wall extending along an outer peripheral edge of the inner wall, and
the coupling part protrudes on one side or the other side in the vehicle inner-outer direction from the inner wall and is formed continuously with a part of the peripheral wall.

5. The vehicle structure according to any of claims 1 to 4, wherein the sensor support member includes a protruding shape part being placed adjacent to the cavity and protruding on one side or the other side in the vehicle inner-outer direction.

6. The vehicle structure according to any of claims 1 to 5, wherein the cavity includes an inner wall, and a peripheral wall extending along an outer peripheral edge of the inner wall, and
the sensor support member includes a stepped part being placed adjacent to an extended portion extending in a first direction in the peripheral wall, protruding on one side or the other side in the vehicle inner-outer direction, and extending in the first direction beyond an end in a longitudinal direction of the extended portion.

7. The vehicle structure according to claim 6, wherein the sensor support member includes:
a distal vehicle body fixing part being spaced on a side further away from the cavity than the stepped part in a second direction that is orthogonal to the first direction and being fixed to a vehicle body, and
a bulging part being placed between the stepped part and the distal vehicle body fixing part, bulging on one side or the other side in the vehicle inner-outer direction and extending in the second direction.

8. The vehicle structure according to any of claims 1 to 7, wherein the cavity includes an inner wall, and a peripheral wall extending along an outer peripheral edge of the inner wall,
the sensor support part is formed to protrude from the inner wall to the other side in the vehicle inner-outer direction, and
the sensor support member includes a reinforcement protruding from the inner wall to the other side in the vehicle inner-outer direction and coupling and reinforcing the peripheral wall and the sensor support part.

9. The vehicle structure according to any of claims 1 to 8, wherein the sensor support member includes a proximal vehicle body fixing part provided in the cavity and fixed to a vehicle body.
